# EUROPEAN PATENT APPLICATION

(11) **EP 4 704 219 A1**
(43) Date of publication of application: **04.03.2026**
(21) Application number: 24795511.5
(22) Date of filing: 01.02.2024
(51) Int. Cl.: H01M 10/613

(54) **TEMPERATURE CONTROL METHOD, APPARATUS AND DEVICE FOR BATTERY PACK, AND NEW ENERGY VEHICLE**

(30) Priority: 28.04.2023 CN 202310479144
(71) Applicant: Chongqing Changan Automobile Co., Ltd., Chongqing 400023 (CN)
(72) Inventor: YANG, Fan, Chongqing 400023 (CN); LI, Jingyuan, Chongqing 400023 (CN); YIN, Hao, Chongqing 400023 (CN); LV, Yang, Chongqing 400023 (CN); MA, Feng, Chongqing 400023 (CN)
(74) Representative: Barker Brettell LLP
(86) International application number: PCT/CN2024/075324
(87) International publication number: WO 2024/222122

(57) **Abstract**

The present application relates to the field of new energy vehicle technologies and, in particular, to a temperature control method, apparatus and device for a battery pack and a new energy vehicle. The temperature control method for the battery pack includes: obtaining a maximum temperature value and a minimum temperature value inside the battery pack; comparing whether a difference between the maximum temperature value and the minimum temperature value is greater than a designed threshold, and whether the maximum temperature value is greater than or equal to a first tolerance temperature threshold of the battery pack; if so, turning on the compressor, the first water pump, and the stop valve to allow the first water pump to drive the coolant into the battery pack and exchange heat between heat generated by the battery pack and the refrigerant of the cooler. The present application can actively adjust the flow rate of the refrigerant according to the temperature difference inside the battery, achieving precise control of the internal temperature of the battery pack, avoiding thermal runaway caused by uneven discharge of the battery pack, and improving the service life of the battery pack.

## Description

This application claims priority to Chinese Patent Application No. 202310479144.9, filed with the China National Intellectual Property Administration on April 28, 2023 and entitled "TEMPERATURE CONTROL METHOD, APPARATUS AND DEVICE FOR BATTERY PACK, AND NEW ENERGY VEHICLE", which is hereby incorporated by reference in its entirety.

### TECHNICAL FIELD

The present application relates to the field of new energy vehicle technologies and, in particular, to a temperature control method, apparatus and device for a battery pack and a new energy vehicle.

### BACKGROUND

New energy vehicles have outstanding advantages in improving energy utilization efficiency and reducing carbon emissions, and their popularity and market share in the consumer market are gradually increasing. With the increasing popularity of the new energy vehicles, requirements for endurance mileage of the new energy vehicles are also constantly increasing. However, due to limited space of the entire vehicle, it is not feasible to increase a battery volume. Therefore, increasing energy density of a power battery has become an effective solution always used in the industry to improve the endurance mileage of the new energy vehicles. The increase in the energy density of the power battery is accompanied by problems such as high heat generation and high temperature for the battery, which have adverse effects on the electric quantity and lifespan of the battery.

At present, the new energy vehicles mainly use battery packs as energy sources, which are dynamically adjusted according to the air conditioning heat load and battery cooling requirements to ensure the comfort of the entire vehicle and save energy. However, in related technologies, a cooling level of an air conditioning compressor is usually controlled according to a maximum temperature value of the battery pack, resulting in uneven temperature distribution throughout the battery pack, leading to inconsistent discharge or even thermal runaway, and reducing the service life of the battery pack.

### SUMMARY

A purpose of the present application is to provide a temperature control method, apparatus and device for a battery pack, and a new energy vehicle, which can finely control the temperature inside the battery pack, avoid thermal runaway caused by uneven discharge of the battery pack, and improve the service life of the battery pack.

In a first aspect, an embodiment of the present application provides a temperature control method for a battery pack, applied to a passenger compartment thermal management circuit and a battery pack thermal management circuit arranged in parallel, where the passenger compartment thermal management circuit includes a main circuit, and a first branch and a second branch connected with the main circuit and arranged in parallel, the main circuit includes a compressor, a condenser and a liquid reservoir arranged in sequence, the first branch includes an evaporator and an electronic expansion valve connected to an inlet of the evaporator, the second branch includes a cooler, a thermal expansion valve connected to an inlet of the cooler, and a stop valve connected to the thermal expansion valve; the battery pack thermal management circuit includes a battery pack, a first water pump, and the cooler arranged in sequence, one side of the cooler facing the evaporator is refrigerant, and one side of the cooler facing the battery pack is coolant, a plurality of temperature sensors are provided in the battery pack to detect temperatures at various positions inside the battery pack; and the temperature control method includes: obtaining a maximum temperature value and a minimum temperature value inside the battery pack; comparing whether a difference between the maximum temperature value and the minimum temperature value is greater than a designed threshold, and whether the maximum temperature value is greater than or equal to a first tolerance temperature threshold of the battery pack; if so, turning on the compressor, the first water pump, and the stop valve to allow the first water pump to drive the coolant into the battery pack and exchange heat between heat generated by the battery pack and the refrigerant of the cooler.

Further, the temperature control method further includes: comparing whether the maximum temperature value is less than or equal to a second tolerance temperature threshold of the battery pack; if so, turning off the stop valve and reducing a rotational speed of the compressor, where the first tolerance temperature threshold is greater than the second tolerance temperature threshold.

Further, the temperature control method further includes: comparing whether the difference between the maximum temperature value and the minimum temperature value is less than or equal to the designed threshold and is greater than 0; if so, turning off the first water pump.

Further, the temperature control method further includes: obtaining a temperature value of a passenger compartment; if the temperature value of the passenger compartment is greater than a target threshold, turning on the electronic expansion valve and the compressor to cool the passenger compartment, and adjusting an opening degree of the electronic expansion valve and a rotational speed of the compressor according to a temperature change of the battery pack.

Further, the adjusting the opening degree of the electronic expansion valve and the rotational speed of the compressor according to the temperature change of the battery pack includes: when the difference between the maximum temperature value and the minimum temperature value of the battery pack is greater than the designed threshold, if the maximum temperature value is greater than or equal to the first tolerance temperature threshold of the battery pack, increasing the opening degree of the electronic expansion valve to a first opening degree and increasing the rotational speed of the compressor to a first rotational speed; if the maximum temperature value is less than or equal to a second tolerance temperature threshold of the battery pack, reducing the opening degree of the electronic expansion valve to a second opening degree and reducing the rotational speed of the compressor to a second rotational speed; where the first tolerance temperature threshold is greater than the second tolerance temperature threshold; and when the difference between the maximum temperature value and the minimum temperature value of the battery pack is less than or equal to the designed threshold and is greater than 0, if the maximum temperature value is greater than or equal to the first tolerance temperature threshold, turning on the stop valve and the first water pump, simultaneously increasing the opening degree of the electronic expansion valve to a third opening degree and increasing the rotational speed of the compressor to a third rotational speed; if the maximum temperature value is less than or equal to the second tolerance temperature threshold, turning off the stop valve, reducing the opening degree of the electronic expansion valve to a fourth opening degree and reducing the rotational speed of the compressor to a fourth rotational speed; where the first opening degree, the second opening degree, the third opening degree, and the fourth opening degree decrease in sequence; the first rotational speed, the second rotational speed, the third rotational speed, and the fourth rotational speed decrease in sequence.

Further, the condenser is an air-cooled condenser, and the passenger compartment thermal management circuit further includes a first fan adjacent to the condenser; and the temperature control method further includes: when increasing or decreasing the rotational speed of the compressor, simultaneously increasing or decreasing a rotational speed of the first fan.

Further, the condenser is a water-cooled condenser, and the passenger compartment thermal management circuit further includes a second water pump connected to the condenser, a heat radiator, and a second fan adjacent to the heat radiator; and the temperature control method further includes: when increasing or decreasing the rotational speed of the compressor, simultaneously increasing or decreasing a rotational speed of the second fan.

In a second aspect, an embodiment of the present application provides a temperature control apparatus for a battery pack, applied to a passenger compartment thermal management circuit and a battery pack thermal management circuit arranged in parallel, where the passenger compartment thermal management circuit includes a main circuit, and a first branch and a second branch connected with the main circuit and arranged in parallel, the main circuit includes a compressor, a condenser and a liquid reservoir arranged in sequence, the first branch includes an evaporator and an electronic expansion valve connected to an inlet of the evaporator, the second branch includes a cooler, a thermal expansion valve connected to an inlet of the cooler, and a stop valve connected to the thermal expansion valve; the battery pack thermal management circuit includes a battery pack, a first water pump, and the cooler arranged in sequence, one side of the cooler facing the evaporator is refrigerant, and one side of the cooler facing the battery pack is coolant, a plurality of temperature sensors are provided in the battery pack to detect temperatures at various positions inside the battery pack; and the temperature control apparatus includes: an obtaining unit, configured to obtain a maximum temperature value and a minimum temperature value inside the battery pack; a comparing unit, configured to compare whether a difference between the maximum temperature value and the minimum temperature value is greater than a designed threshold, and whether the maximum temperature value is greater than or equal to a first tolerance temperature threshold of the battery pack, and output a comparison result; a control unit, configured to: if the comparison result is yes, turn on the compressor, the first water pump, and the stop valve to allow the first water pump to drive the coolant into the battery pack and exchange heat between heat generated by the battery pack and the refrigerant of the cooler.

Further, the comparing unit is further configured to compare whether the maximum temperature value is less than or equal to a second tolerance temperature threshold of the battery pack, and output a comparison result; the control unit is further configured to: if the comparison result is yes, turn off the stop valve and reduce a rotational speed of the compressor, where the first tolerance temperature threshold is greater than the second tolerance temperature threshold.

In some embodiments, the comparing unit is further configured to compare whether the difference between the maximum temperature value and the minimum temperature value is less than or equal to the designed threshold and is greater than 0; the control unit is further configured to: if the comparison result is yes, turn off the first water pump.

Further, the obtaining unit is further configured to obtain the minimum temperature value of the battery pack; the control unit is further configured to: if the difference between the maximum temperature value and the minimum temperature value is less than or equal to the designed threshold, and the maximum temperature value is less than the first tolerance temperature threshold of the battery pack and is greater than the second tolerance temperature threshold of the battery pack, where the first tolerance temperature threshold is greater than the second tolerance temperature threshold, turn off the stop valve.

Further, the control unit is further configured to: if the maximum temperature value is less than or equal to the second tolerance temperature threshold, turn off the first water pump.

Further, the obtaining unit is further configured to obtain a temperature value of a passenger compartment; the control unit is further configured to: if the temperature value of the passenger compartment is greater than a target threshold, turn on the electronic expansion valve and the compressor to cool the passenger compartment, and adjust an opening degree of the electronic expansion valve and a rotational speed of the compressor according to a temperature change of the battery pack.

Further, when the comparison result of the comparing unit is that the difference between the maximum temperature value and the minimum temperature value of the battery pack is greater than the designed threshold, if the maximum temperature value is greater than or equal to the first tolerance temperature threshold of the battery pack, the control unit is further configured to increase the opening degree of the electronic expansion valve to a first opening degree and increase the rotational speed of the compressor to a first rotational speed; if the maximum temperature value is less than or equal to a second tolerance temperature threshold of the battery pack, the control unit is further configured to reduce the opening degree of the electronic expansion valve to a second opening degree and reduce the rotational speed of the compressor to a second rotational speed; where the first tolerance temperature threshold is greater than the second tolerance temperature threshold; and when the comparison result of the comparing unit is that the difference between the maximum temperature value and the minimum temperature value of the battery pack is less than or equal to the designed threshold and is greater than 0, if the maximum temperature value is greater than or equal to the first tolerance temperature threshold, the control unit is further configured to turn on the stop valve and the first water pump, simultaneously increase the opening degree of the electronic expansion valve to a third opening degree and increase the rotational speed of the compressor to a third rotational speed; if the maximum temperature value is less than or equal to the second tolerance temperature threshold, the control unit is further configured to turn off the stop valve, reduce the opening degree of the electronic expansion valve to a fourth opening degree and reduce the rotational speed of the compressor to a fourth rotational speed, reduce the opening degree of the electronic expansion valve and the rotational speed of the compressor; where the first opening degree, the second opening degree, the third opening degree, and the fourth opening degree decrease in sequence; the first rotational speed, the second rotational speed, the third rotational speed, and the fourth rotational speed decrease in sequence.

Further, the condenser is an air-cooled condenser, and the passenger compartment thermal management circuit further includes a first fan adjacent to the condenser; and the control unit is further configured to: when increasing or decreasing the rotational speed of the compressor, simultaneously increase or decrease a rotational speed of the first fan.

Further, the condenser is a water-cooled condenser, and the passenger compartment thermal management circuit further includes a second water pump connected to the condenser, a heat radiator, and a second fan adjacent to the heat radiator; and the control unit is further configured to: when increasing or decreasing the rotational speed of the compressor, simultaneously increase or decrease a rotational speed of the second fan.

In a third aspect, an embodiment of the present application provides a temperature control device for a battery pack, including: a memory, configured to store computer program instructions; a processor, configured to: when the computer program instructions are executed by the processor, implement the temperature control method for the battery pack as mentioned previously.

In a fourth aspect, an embodiment of the present application provides a new energy vehicle, including a passenger compartment thermal management circuit and a battery pack thermal management circuit arranged in parallel, and the temperature control device for the battery pack as described previously, where the temperature control device is electrically connected to the passenger compartment thermal management circuit and the battery pack thermal management circuit, respectively.

In a fifth aspect, the present application provides a computer readable storage medium, storing computer executable instructions which, when executed by a processor, is configured to implement the method as described in the first aspect above or any one of implementations thereof.

In a sixth aspect, the present application provides a computer program product, including a computer program which, when executed by a processor, is configured to implement the method as described in the first aspect above or any one of implementations thereof.

The embodiments of the present application provide a temperature control method, apparatus and device for a battery pack, and a new energy vehicle, applied to a passenger compartment thermal management circuit and a battery pack thermal management circuit arranged in parallel, where the passenger compartment thermal management circuit includes a main circuit, and a first branch and a second branch connected with the main circuit and arranged in parallel, the main circuit includes a compressor, a condenser and a liquid reservoir arranged in sequence, the first branch includes an evaporator and an electronic expansion valve connected to an inlet of the evaporator, the second branch includes a cooler, a thermal expansion valve connected to an inlet of the cooler, and a stop valve connected to the thermal expansion valve; the battery pack thermal management circuit includes a battery pack, a first water pump, and the cooler arranged in sequence, one side of the cooler facing the evaporator is refrigerant, and one side of the cooler facing the battery pack is coolant, a plurality of temperature sensors are provided in the battery pack to detect temperatures at various positions inside the battery pack. Thus, the passenger compartment thermal management circuit and the battery pack thermal management circuit share the same cooler, one side of the cooler facing the evaporator is coolant, one side of the cooler facing the battery pack is refrigerant, and a combination valve group of the thermal expansion valve and the stop valve is set on the inlet of the cooler, the on/off of the stop valve can be controlled according to the temperature difference inside the battery pack, so as to actively adjust the flow rate of the refrigerant, achieving precise control of the internal temperature of the battery pack, avoiding thermal runaway caused by uneven discharge of the battery pack, and improving the service life of the battery pack.

### BRIEF DESCRIPTION OF DRAWINGS

FIG. 1 shows a schematic structural diagram of a passenger compartment thermal management circuit and a battery pack thermal management circuit in a new energy vehicle provided in an embodiment of the present application.
FIG. 2 shows another schematic structural diagram of a passenger compartment thermal management circuit and a battery pack thermal management circuit in a new energy vehicle provided in an embodiment of the present application.
FIG. 3 shows a flowchart of a temperature control method for a battery pack provided in an embodiment of the present application.
FIG. 4 shows a schematic structural diagram of a temperature control apparatus for a battery pack provided in an embodiment of the present application.

M1-passenger compartment thermal management circuit; M2-battery pack thermal management circuit; L-main circuit; B1-first branch; B2-second branch; 1-compressor; 2-condenser; 21-first fan; 22-second fan; 23-second water pump; 24-heat radiator; 3-liquid reservoir; 4-evaporator; 5-electronic expansion valve; 6-cooler; 7-thermal expansion valve; 8-stop valve; 9-first water pump; 10-battery pack;
Tmax-maximum temperature value; Tmin-minimum temperature value; T1-designed threshold; Tba1-first tolerance temperature threshold; Tba2-second tolerance temperature threshold; T2-target threshold;
100-obtaining unit; 200-comparing unit; 300-control unit.

### DESCRIPTION OF EMBODIMENTS

The following will illustrate implementations of the present application with reference to the accompanying drawings and preferred embodiments. Those skilled in the art can easily understand other advantages and effects of the present application from the content disclosed in the specification. The present application can also be implemented or applied through other different specific implementations, and various details in the specification can be modified or changed based on different perspectives and applications without departing from the spirit of the present application. It should be understood that the preferred embodiments are only intended to illustrate the present application and not to limit the protection scope of the present application.

It should be noted that the illustrations provided in the following embodiments only schematically illustrate the basic concept of the present application. Therefore, the illustrations only show the components related to the present application and are not drawn according to the number, shape, and size of the components in actual implementation. The form, quantity, and proportion of each component in actual implementation can be arbitrarily changed, and the layout of the components may also be more complex.

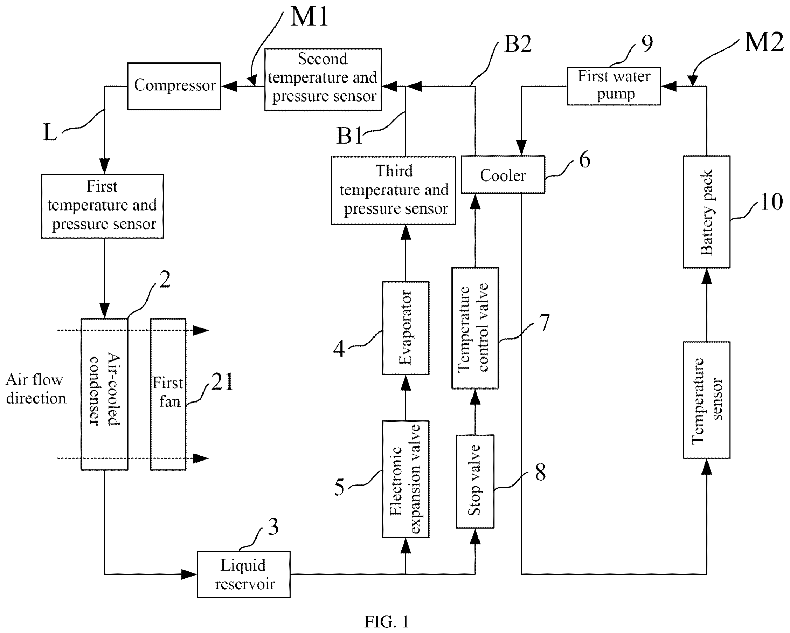

As shown in FIGS. 1 to 2, an embodiment of the present application provides a new energy vehicle, including a passenger compartment thermal management circuit M1 and a battery pack thermal management circuit M2 arranged in parallel, where the passenger compartment thermal management circuit M1 includes a main circuit L, and a first branch B1 and a second branch B2 connected with the main circuit L and arranged in parallel, the main circuit L includes a compressor 1, a condenser 2 and a liquid reservoir 3 arranged in sequence, the first branch B1 includes an evaporator 4 and an electronic expansion valve 5 connected to an inlet of the evaporator 4, the second branch B2 includes a cooler 6, a thermal expansion valve 7 connected to an inlet of the cooler 6, and a stop valve 8 connected to the thermal expansion valve 7.

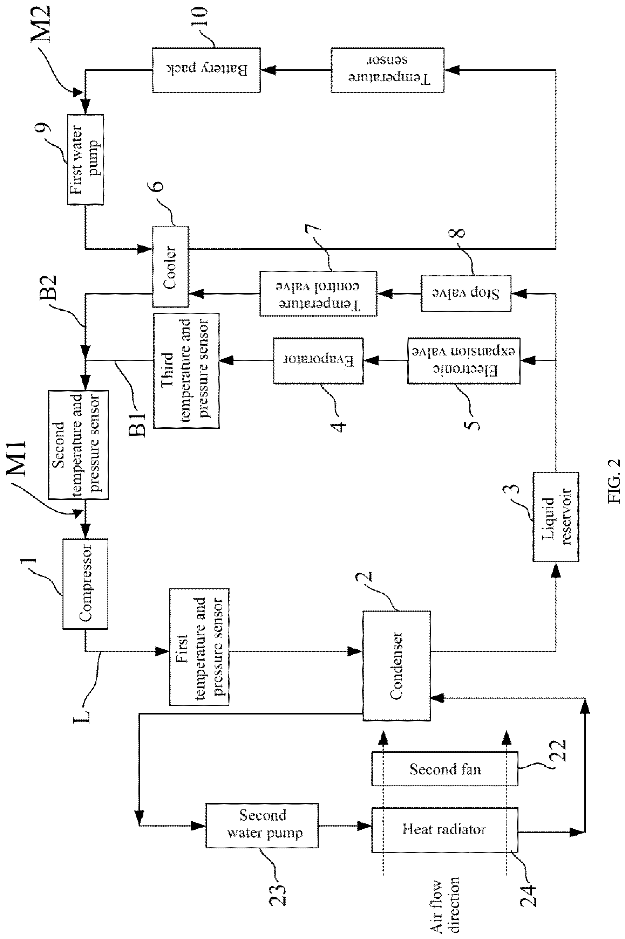

The main circuit L of the passenger compartment thermal management circuit M1 includes the compressor 1, the condenser 2, and the liquid reservoir 3 arranged in sequence. As shown in FIG. 1, the condenser 2 can be an air-cooled condenser 2, and the passenger compartment thermal management circuit M1 also includes a first fan 21 adjacent to the condenser 2. As shown in FIG. 2, the condenser 2 is a water-cooled condenser 2, and the passenger compartment thermal management circuit M1 also includes a second water pump 23 connected to the condenser 2, a heat radiator 24, and a second fan 22 adjacent to the heat radiator 24.

The first branch B1 includes an evaporator 4 and an electronic expansion valve 5 connected to an inlet of the evaporator 4. The evaporator 4 is a core component of an air conditioning system (Heating Ventilation and Air Conditioning, HVAC) and can exchange heat with the cab through the air supply device in the HVAC. When the electronic expansion valve 5 is turned on, the first branch B1 is connected, and the refrigerant flows through the evaporator 4 and the condenser 2 under the action of the compressor 1, which can achieve cooling control of the passenger compartment. When the electronic expansion valve 5 is turned off, the first branch B1 is disconnected and no longer provides cooling control for the passenger compartment.

The second branch B2 includes a cooler 6, a thermal expansion valve 7 connected to an inlet of the cooler 6, and a stop valve 8 connected to the thermal expansion valve 7. One side of the cooler 6 facing the evaporator 4 is refrigerant, and one side of the cooler 6 facing the battery pack 10 is coolant. The thermal expansion valve 7 can be a temperature regulating valve, which works by passively adjusting the flow rate of the refrigerant in the cooler 6 through sensing the degree of superheat of the refrigerant flowing through thereof, and achieving on-off control through the stop valve 8. When the stop valve 8 is opened, the second branch B2 is connected, and the passenger compartment thermal management circuit M1 can be used to actively adjust the refrigerant flow in the cooler 6. Where the refrigerant can be tetrafluoroethane refrigerant (such as R134a) or mixed refrigerant (such as R410a), but not limited to these.

The battery pack thermal management circuit M2 includes a battery pack 10, a first water pump 9, and a cooler 6 arranged in sequence. A plurality of temperature sensors are provided in the battery pack 10 to detect temperatures at various positions inside the battery pack 10. When the first water pump 9 is turned on, it can drive the coolant to flow through the battery pack 10, taking away the heat generated by the battery pack 10, thereby achieving cooling control of the battery pack 10. If the stop valve 8 is opened simultaneously, the coolant can exchange heat with the refrigerant while flowing through the cooler 6, and the heat in the coolant can be carried away by the evaporation of the refrigerant, thereby improving the cooling efficiency.

In addition, the components in the passenger compartment thermal management circuit M1 and the battery pack thermal management circuit M2 are connected by pipes, where the pipes can be metal pipes such as copper pipes, aluminum alloy pipes, or can be rubber pipes, plastic pipes, etc., which are not limited here. The pipes between components can be made of the same material, or the material of the pipes can be selected appropriately according to the temperature of the coolant in each pipe during operation, which are not limited here.

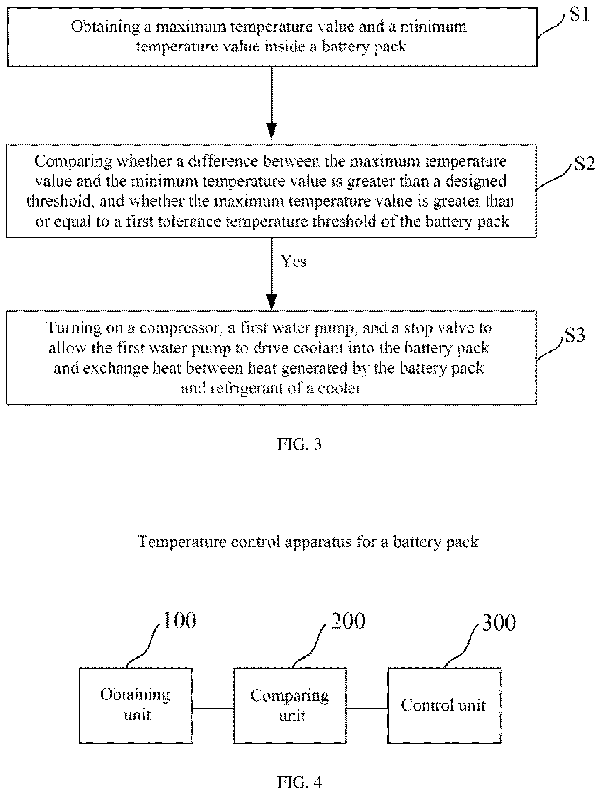

As shown in FIG. 3, an embodiment of the present application provides a temperature control method for a battery pack, which is applied to the passenger compartment thermal management circuit M1 and the battery pack thermal management circuit M2 arranged in parallel as described above. The temperature control method includes the following steps S1 to S3. Specific steps of the temperature control method for the battery pack will be described in detail below with reference to FIGS. 1 to 2.

Step S1, obtaining a maximum temperature value and a minimum temperature value inside the battery pack.

The maximum temperature value Tmax and the minimum temperature value Tmin inside the battery pack 10 can be selected from a set of data measured by a plurality of temperature sensors set inside the battery pack 10. For example, the maximum temperature value Tmax is measured at an electrode terminal of the battery pack, and the minimum temperature value Tmin is measured at the position, on the shell of the battery pack, farthest from the electrode terminal. The positions corresponding to the maximum temperature value Tmax and the minimum temperature value Tmin inside the battery pack 10 at different times can be the same or different.

Step S2, comparing whether a difference between the maximum temperature value and the minimum temperature value is greater than a designed threshold, and whether the maximum temperature value is greater than or equal to a first tolerance temperature threshold of the battery pack 10.

The designed threshold T1 is a temperature difference value allowed for the battery pack 10 in the operating state, and the value range of T1 is 5°C~10°C. In one example, T1=6°C. The first tolerance temperature threshold Tba1 is a tolerance temperature value at which the battery pack 10 does not experience thermal runaway in the operating state. Optionally, the value range of Tba1 is 43°C~50°C. In one example, Tba1=45°C. The designed threshold T1 and the first tolerance temperature threshold Tba1 can be determined according to the specific application environment of the actual product, which are not limited to examples.

Step S3, if so, turning on the compressor 1, the first water pump 9, and the stop valve 8 to allow the first water pump 9 to drive the coolant into the battery pack 10 and exchange heat between heat generated by the battery pack 10 and the refrigerant of the cooler 6.

If Tmax-Tmin≥T1 and Tmax≥Tba1, it indicates that there is a large temperature difference inside the battery pack 10, and the position with the maximum temperature is about to enter a thermal runaway state, and the battery pack 10 needs to be cooled as soon as possible. At this time, in addition to starting the first water pump 9 in the battery pack thermal management circuit M2 to drive the coolant into the battery pack 10 and take away the heat of the battery pack 10, the stop valve 8 and the compressor 1 can also be turned on to start the second branch L2 in the passenger compartment thermal management circuit M1, so that the refrigerant circulates in the passenger compartment thermal management circuit M1 and actively adjusts the flow rate of the refrigerant, improving the heat exchange efficiency between the refrigerant and the coolant in the cooler 6, and further improving the cooling efficiency of the battery pack 10.

Therefore, in the temperature control method for the battery pack provided in the embodiment of the present application, the passenger compartment thermal management circuit M1 and the battery pack thermal management circuit M2 share the same cooler 6, and one side of the cooler 6 facing the evaporator 4 is refrigerant, and one side of the cooler 6 facing the battery pack 10 is coolant, a combination valve group of the thermal expansion valve 7 and the stop valve 8 is set on one side of the cooler 6, the on/off of the stop valve 8 can be controlled according to the temperature difference inside the battery pack 10, so as to actively adjust the flow rate of the refrigerant, achieving precise control of the internal temperature of the battery pack 10, avoiding thermal runaway caused by uneven discharge of the battery pack 10, and improving the safety and reliability of the battery pack 10.

In some embodiments, the temperature control method for the battery pack further includes:
Step S4, comparing whether the maximum temperature value is less than or equal to a second tolerance temperature threshold of the battery pack 10;
Step S5, if so, turning off the stop valve 8 and reducing a rotational speed of the compressor 1, where the first tolerance temperature threshold Tbat1 is greater than the second tolerance temperature threshold Tbat2.

Optionally, the value range of Tba2 is 41°C~50°C; further optionally, Tba1-Tba2=2°C∼5°C. In one example, the second tolerance temperature threshold Tba2=43°C.

When Tmax≤Tbat2, after the battery pack 10 gradually decreases from the state of imminent thermal runaway to Tbat1 and Tbat2, the battery pack 10 is out of the thermal runaway state, the stop valve 8 can be turned off, the second branch B2 of the passenger compartment thermal management circuit M1 is disconnected, and the rotational speed of the compressor 1 can be reduced, even reduced to 0, so as to reduce the flow of refrigerant. The cooling liquid can be driven into the battery pack 10 through the first water pump 9 of the battery pack thermal management circuit M2 to dissipate heat until the average temperature of the battery pack 10 drops to the safe operating temperature range, thereby ensuring uniform discharge of the battery pack 10 and greatly reducing energy consumption.

In some embodiments, the temperature control method for the battery pack further includes:
Step S5, comparing whether the difference between the maximum temperature value and the minimum temperature value is less than or equal to the designed threshold and is greater than 0;
Step S6, if so, turning off the first water pump 9.

When 0<Tmax-Tmin ≤ T1, it indicates that the internal temperature difference of the battery pack 10 is small and within the safe operating temperature range, and there is no need to continue being cooled, simply turning off the first water pump 9 to reduce energy waste and energy consumption.

In some embodiments, when both the battery pack 10 and the passenger compartment have cooling requirements, in order to improve the comfort of the passenger compartment, the temperature control method for the battery pack further includes:
Step S1', obtaining a temperature value of a passenger compartment;
Step S2', if the temperature value of the passenger compartment is greater than a target threshold, turning on the electronic expansion valve 5 and the compressor 1 to cool the passenger compartment, and adjusting an opening degree of the electronic expansion valve 5 and a rotational speed of the compressor 1 according to a temperature change of the battery pack 10.

The target threshold T2 of the passenger compartment is generally 27°C~30°C. If the temperature value of the passenger compartment is greater than the target threshold T2, the electronic expansion valve 5 needs to be turned on to connect the main circuit L and the first branch L1 of the passenger compartment thermal management circuit M1, and the passenger compartment is cooled through the joint action of the compressor 1, the condenser 2, and the evaporator 4. At the same time, the opening degree of the electronic expansion valve 5 and the rotational speed of the compressor 1 can be adjusted according to the temperature changes of the battery pack 10, so as to change the flow rate of the refrigerant, thereby adjusting the cooling effect of the battery pack 10, minimizing energy waste and reducing energy consumption as much as possible.

Specifically, in step S2', the adjusting the opening degree of the electronic expansion valve 5 and the rotational speed of the compressor 1 according to the temperature change of the battery pack 10 includes:
step S21, when the difference between the maximum temperature value and the minimum temperature value of the battery pack 10 is greater than the designed threshold, if the maximum temperature value is greater than or equal to a first tolerance temperature threshold of the battery pack 10, increasing the opening degree of the electronic expansion valve 5 to a first opening degree and increasing the rotational speed of the compressor 1 to a first rotational speed;
if the maximum temperature value is less than a second tolerance temperature threshold of the battery pack 10, reducing the opening degree of the electronic expansion valve 5 to a second opening degree and reducing the rotational speed of the compressor 1 to a second rotational speed; where the first tolerance temperature threshold is greater than the second tolerance temperature threshold;
step S22, when the difference between the maximum temperature value and the minimum temperature value is less than or equal to the designed threshold and is greater than 0, if the maximum temperature value is greater than or equal to the first tolerance temperature threshold, turning on the stop valve 8 and the first water pump 9, simultaneously increasing the opening degree of the electronic expansion valve 5 to a third opening degree and increasing the rotational speed of the compressor 1 to a third rotational speed;
if the maximum temperature value is less than the second tolerance temperature threshold, turning off the stop valve 8, reducing the opening degree of the electronic expansion valve 5 to a fourth opening degree and reducing the rotational speed of the compressor 1 to a fourth rotational speed;
where the first opening degree, the second opening degree, the third opening degree, and the fourth opening degree decrease in sequence; and the first rotational speed, the second rotational speed, the third rotational speed, and the fourth rotational speed decrease in sequence.

It is assumed that only the passenger compartment has the cooling requirement under a normal operating state, the opening degree of the electronic expansion valve 5 is the fourth opening degree, where the fourth opening degree can be, for example, 40% to 50% of the maximum opening degree; and the rotational speed of the compressor 1 is the fourth rotational speed, where the fourth rotational speed can be, for example, 60% of the maximum rotational speed.

When the passenger compartment has the cooling requirement, and the temperature difference of the battery pack 10 is large and is in a state of imminent thermal runaway (Tmax-Tmin ≥ T1, Tmax ≥ Tba1), the opening degree of the electronic expansion valve 5 can be increased to the first opening degree, where the first opening degree can be, for example, 80% to 100% of the maximum opening degree, and the rotational speed of the compressor 1 can be increased to the first rotational speed, where the first rotational speed can be, for example, 80% to 100% of the maximum rotational speed; so as to actively increase the opening degree of the temperature control valve 7, thereby increasing the flow rate of the refrigerant in the cooler 6, improving the heat exchange efficiency between the cooling liquid and refrigerant of the battery pack 10, and achieving simultaneous cooling of the passenger compartment and the battery pack 10.

When the battery pack 10 is out of the thermal runaway state (Tmax≤ Tbat2), the opening degree of the electronic expansion valve 5 can be reduced to the second opening degree, where the second opening degree can be, for example, 60%~80% of the maximum opening degree, and the rotational speed of the compressor 1 can be reduced to the second rotational speed, where the second rotational speed can be, for example, 60%~80% of the maximum rotational speed, the heat exchange efficiency of the cooler 6 is reduced; it is sufficient to drive the coolant flowing through the interior of the battery pack 10 by the first water pump 9 for heat exchange with the refrigerant, so as to reduce energy waste and energy consumption.

When the cooling requirement is needed for the passenger compartment, and the internal temperature difference of the battery pack 10 is small but the maximum temperature value is large (0<Tmax-Tmin ≤ T1, Tmax ≥ Tba1), it is required to quickly cool the local high-temperature area of the battery pack 10. At this time, the stop valve 8 and the first water pump 9 are turned on, and the opening degree of the electronic expansion valve 5 is increased to the third opening degree, where the third opening degree can be, for example, 50% to 60% of the maximum opening degree, and the rotational speed of the compressor 1 can be increased to the third rotational speed, where the third rotational speed can be, for example, 50% to 60% of the maximum rotational speed; so as to actively increase the opening degree of the temperature control valve 7, thereby increasing the flow rate of the refrigerant in the cooler 6, improving the heat exchange efficiency between the cooling liquid and refrigerant of the battery pack 10, and achieving simultaneous cooling of the passenger compartment and the battery pack 10.

When the battery pack 10 is out of the thermal runaway state (Tmax≤ Tbat2) and reaches the safe operating temperature, the stop valve 8 can be turned off; the cooling requirement of the battery pack can be met by driving, through the first water pump 9, the coolant flowing through the interior of the battery pack 10 to take away the heat. At the same time, the opening degree of the electronic expansion valve 5 and the rotational speed of the compressor 1 are adjusted to a normal operating state, that is, the opening degree of the electronic expansion valve 5 is reduced to the fourth opening degree, where the fourth opening degree can be, for example, 40%~50% of the maximum opening degree, and the rotational speed of the compressor 1 is reduced to the fourth rotational speed, where the fourth rotational speed can be, for example, 60% of the maximum rotational speed; it is sufficient to cool the passenger compartment, so as to reduce energy waste and energy consumption.

In some embodiments, as shown in FIG. 1, the condenser 2 is an air-cooled condenser 2, and the passenger compartment thermal management circuit M1 further includes a first fan 21 adjacent to the condenser 2. The temperature control method for the battery pack further includes: when increasing or decreasing the rotational speed of the compressor 1, simultaneously increasing or decreasing a rotational speed of the first fan 21. The rotational speed of the first fan 21 depends on the specific application environment. The first fan 21 can accelerate or decrease the air flow, change the cooling effect of the refrigerant in the condenser 2 and the evaporator 4, therefore actively adjusting the opening degree of the temperature control valve 7, increasing the flow rate of the refrigerant in the cooler 6, further improving the heat exchange efficiency between the cooling liquid and the refrigerant of the battery pack 10.

In some embodiments, as shown in FIG. 2, the condenser 2 is a water-cooled condenser 2, and the passenger compartment thermal management circuit M1 further includes a second water pump 23 connected to the condenser 2, a heat radiator 24, and a second fan 22 adjacent to the heat radiator 24; and the temperature control method further includes: when increasing or decreasing the rotational speed of the compressor 1, simultaneously increasing or decreasing a rotational speed of the second fan 22. The rotational speed of the second fan 22 depends on the specific application environment. The second fan 22 can accelerate or decrease the air flow, change the cooling effect of the refrigerant in the condenser 2 and the evaporator 4, therefore actively adjusting the opening degree of the temperature control valve 7, increasing the flow rate of the refrigerant in the cooler 6, and further improving the heat exchange efficiency between the cooling liquid and the refrigerant of the battery pack 10.

As shown in FIG. 4, an embodiment of the present application provides a temperature control apparatus for a battery pack, which is applied to the passenger compartment thermal management circuit M1 and the battery pack 10 thermal management circuit M2 arranged in parallel as described above. The temperature control apparatus includes an obtaining unit 100, a comparing unit 200 and a control unit 300.

The obtaining unit 100 is configured to obtain a maximum temperature value and a minimum temperature value inside the battery pack 10.

The comparing unit 200 is configured to compare whether a difference between the maximum temperature value and the minimum temperature value is greater than a designed threshold, and whether the maximum temperature value is greater than or equal to a first tolerance temperature threshold of the battery pack 10, and output a comparison result.

The control unit 300 is configured to: if the comparison result is yes, turn on the compressor 1, the first water pump 9, and the stop valve 8 to allow the first water pump 9 to drive the coolant into the battery pack 10 and exchange heat between heat generated by the battery pack 10 and the refrigerant of the cooler 6.

Therefore, in the temperature control apparatus for the battery pack provided in the embodiment of the present application, the passenger compartment thermal management circuit M1 and the battery pack thermal management circuit M2 share the same cooler 6, and one side of the cooler 6 facing the evaporator 4 is refrigerant, and one side of the cooler 6 facing the battery pack 10 is coolant, a combination valve group of the thermal expansion valve 7 and the stop valve 8 is set on one side of the cooler 6, the on/off of the stop valve 8 can be controlled according to the temperature difference inside the battery pack 10, so as to actively adjust the flow rate of the refrigerant, achieving precise control of the internal temperature of the battery pack 10, avoiding thermal runaway caused by uneven discharge of the battery pack 10, and improving the safety and reliability of the battery pack 10.

In some embodiments, the comparing unit 200 is further configured to compare whether the maximum temperature value is less than or equal to a second tolerance temperature threshold of the battery pack 10, and input a comparison result; and the control unit 300 is further configured to: if the comparison result is yes, turn off the stop valve 8 and reduce a rotational speed of the compressor 1, where the first tolerance temperature threshold is greater than the second tolerance temperature threshold.

In some embodiments, the comparing unit 200 is further configured to compare whether the difference between the maximum temperature value and the minimum temperature value is greater than 0 and less than or equal to the designed threshold; the control unit is further configured to: if the comparison result is yes, turn off the first water pump 9.

In some embodiments, the obtaining unit 100 is further configured to obtain a temperature value of a passenger compartment; the control unit 300 is further configured to: if the temperature value of the passenger compartment is greater than a target threshold, turn on the electronic expansion valve 5 and the compressor 1 to cool the passenger compartment, and adjust an opening degree of the electronic expansion valve 5 and a rotational speed of the compressor 1 according to a temperature change of the battery pack 10.

In some embodiments, when the comparison result of the comparing unit 200 is that the difference between the maximum temperature value and the minimum temperature value of the battery pack 10 is greater than the designed threshold, if the maximum temperature value is greater than or equal to the first tolerance temperature threshold of the battery pack 10, the control unit 300 is further configured to increase the opening degree of the electronic expansion valve 5 to a first opening degree and increase the rotational speed of the compressor 1 to a first rotational speed; if the maximum temperature value is less than or equal to a second tolerance temperature threshold of the battery pack 10, the control unit 300 is further configured to reduce the opening degree of the electronic expansion valve 5 to a second opening degree and reduce the rotational speed of the compressor 1 to a second rotational speed; where the first tolerance temperature threshold is greater than the second tolerance temperature threshold.

Further, when the comparison result of the comparing unit 200 is that the difference between the maximum temperature value and the minimum temperature value is less than or equal to the designed threshold and is greater than 0, if the maximum temperature value is greater than or equal to the first tolerance temperature threshold, the control unit 300 is further configured to turn on the stop valve 8 and the first water pump 9, simultaneously increase the opening degree of the electronic expansion valve 5 to a third opening degree and increase the rotational speed of the compressor 1 to a third rotational speed; if the maximum temperature value is less than or equal to the second tolerance temperature threshold, the control unit 300 is further configured to turn off the stop valve 8, reduce the opening degree of the electronic expansion valve 5 to a fourth opening degree and reduce the rotational speed of the compressor 1 to a fourth rotational speed.

In some embodiments, the condenser 2 is an air-cooled condenser 2, and the passenger compartment thermal management circuit M1 further includes a first fan 21 adjacent to the condenser 2. The control unit is further configured to: when increasing or decreasing the rotational speed of the compressor 1, simultaneously increase or decrease a rotational speed of the first fan 21.

In some embodiments, the condenser 2 is a water-cooled condenser 2, and the passenger compartment thermal management circuit M1 further includes a second water pump 23 connected to the condenser 2, a heat radiator 24, and a second fan 22 adjacent to the heat radiator 24. The control unit is further configured to: when increasing or decreasing the rotational speed of the compressor 1, simultaneously increase or decrease a rotational speed of the second fan 22.

It can be understood that the temperature control apparatus for the battery pack provided in the embodiment of the present application is the executive subject of the aforementioned temperature control method for the battery pack. For specific execution manners and beneficial effects of each unit, please refer to the content of the aforementioned temperature control method for the battery pack, which will not be repeated here.

In addition, an embodiment of the present application provides a temperature control device for a battery pack, including:
a memory, configured to store computer program instructions;
a processor, configured to: when the computer executable instructions are executed by the processor, implement the temperature control method for the battery pack as mentioned previously.

The temperature control device is electrically connected to the passenger compartment thermal management circuit M1 and the battery pack thermal management circuit M2, and can be integrated into either the passenger compartment thermal management circuit M1 or the battery pack thermal management circuit M2; it can also be set separately, which will not be further described.

In addition, the present application provides a new energy vehicle, including a passenger compartment thermal management circuit M1 and a battery pack 10 thermal management circuit M2 arranged in parallel, and the temperature control device for the battery pack as described previously, where the temperature control device is electrically connected to the passenger compartment thermal management circuit M1 and the battery pack 10 thermal management circuit M2, respectively.

In addition, the present application provides a computer readable storage medium, storing computer executable instructions which, when executed by a processor, is used to implement any one of the above method embodiments. The specific implementation and technical effect are similar to them, and will not be repeated here.

In addition, the present application provides a computer program product, including a computer program which, when executed by a processor, is used to implement any one of the above method embodiments. The specific implementation and technical effect are similar to them, and will not be repeated here.

The program codes for implementing the method of the present invention can be written in any combination of one or more programming languages. These program codes can be provided to a processor or a controller of a general purpose computer, a special purpose computer, or other programmable interrupt handling device, so that when the program codes are executed by the processor or the controller, the functions/the operations specified in the flowchart and/or block diagram are implemented. The program codes can be executed entirely in a machine, be executed partially in a machine, be executed as an independent software package partially in a machine, and partially in a remote machine or entirely in a remote machine or a server.

In the context of the present invention, the machine-readable medium may be a tangible medium that contains or stores programs for use by or in combination with an instruction execution system, apparatus, or device. The machine-readable medium can be a machine-readable signal medium or a machine-readable storage medium. The machine-readable medium may include, but are not limited to, an electronic, magnetic, optical, electromagnetic, infrared, or semiconductor system, apparatus, or device, or any suitable combination of the above. More specific examples of the machine-readable storage medium include an electrical connection with one or more wires, a portable computer diskette, a hard drive, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. It should be noted that the terms "one embodiment", "an embodiment", "exemplary embodiment", "some embodiments," etc. mentioned in the specification indicate that the described embodiments may include specific features, structures, or characteristics, but not necessarily every embodiment includes that specific features, structures, or characteristics. Furthermore, such phrases may not necessarily refer to the same embodiment. Furthermore, when describing specific features, structures, or characteristics in conjunction with embodiments, it is within the knowledge of those skilled in the art to implement such features, structures, or characteristics in conjunction with other embodiments that are explicitly or implicitly described.

It should be noted that in the present application, relationship terms such as "first" and "second" are only used to distinguish one entity or operation from another, and do not necessarily require or imply any actual relationship or order between these entities or operations. Moreover, the terms "include", "comprise", or any other variation thereof are intended to encompass non-exclusive inclusion, such that a process, method, item, or device that includes a series of elements includes not only those elements, but also other elements not explicitly listed, or further includes elements inherent to such process, method, item, or device. Without further limitations, the element defined by the statement "including a..." does not exclude the existence of other identical elements in the process, method, item, or device that includes the element.

Finally, it should be noted that the above embodiments are only used to illustrate the technical solutions of the present application, and not to limit thereto. Although the present application has been described in detail with reference to the aforementioned embodiments, those of ordinary skill in the art should understand that they can still modify the technical solutions described in the aforementioned embodiments, or equivalently replace some or all of the technical features; and these modifications or substitutions do not deviate from the essence of the corresponding technical solutions from the scope of the technical solutions of the various embodiments of the present application.

## Claims

1. A temperature control method for a battery pack, applied to a passenger compartment thermal management circuit and a battery pack thermal management circuit arranged in parallel, wherein the passenger compartment thermal management circuit comprises a main circuit, and a first branch and a second branch connected with the main circuit and arranged in parallel, the main circuit comprises a compressor, a condenser and a liquid reservoir arranged in sequence, the first branch comprises an evaporator and an electronic expansion valve connected to an inlet of the evaporator, the second branch comprises a cooler, a thermal expansion valve connected to an inlet of the cooler, and a stop valve connected to the thermal expansion valve; the battery pack thermal management circuit comprises a battery pack, a first water pump, and the cooler arranged in sequence, one side of the cooler facing the evaporator is refrigerant, and one side of the cooler facing the battery pack is coolant, a plurality of temperature sensors are provided in the battery pack to detect temperatures at various positions inside the battery pack; and the temperature control method comprises:
obtaining a maximum temperature value and a minimum temperature value inside the battery pack;
comparing whether a difference between the maximum temperature value and the minimum temperature value is greater than a designed threshold, and whether the maximum temperature value is greater than or equal to a first tolerance temperature threshold of the battery pack;
if so, turning on the compressor, the first water pump, and the stop valve to allow the first water pump to drive the coolant into the battery pack and exchange heat between heat generated by the battery pack and the refrigerant of the cooler.

2. The temperature control method according to claim 1, further comprising:
comparing whether the maximum temperature value is less than or equal to a second tolerance temperature threshold of the battery pack;
if so, turning off the stop valve and reducing a rotational speed of the compressor, wherein the first tolerance temperature threshold is greater than the second tolerance temperature threshold.

3. The temperature control method according to claim 1 or 2, further comprising:
comparing whether the difference between the maximum temperature value and the minimum temperature value is less than or equal to the designed threshold and is greater than 0;
if so, turning off the first water pump.

4. The temperature control method according to any one of claims 1 to 3, further comprising:
obtaining a temperature value of a passenger compartment;
comparing whether the temperature value of the passenger compartment is greater than a target threshold;
if so, turning on the electronic expansion valve and the compressor to cool the passenger compartment, and adjusting an opening degree of the electronic expansion valve and a rotational speed of the compressor according to a temperature change of the battery pack.

5. The temperature control method according to claim 4, wherein the adjusting the opening degree of the electronic expansion valve and the rotational speed of the compressor according to the temperature change of the battery pack comprises:
when the difference between the maximum temperature value and the minimum temperature value of the battery pack is greater than the designed threshold,
if the maximum temperature value is greater than or equal to the first tolerance temperature threshold of the battery pack, increasing the opening degree of the electronic expansion valve to a first opening degree and increasing the rotational speed of the compressor to a first rotational speed;
if the maximum temperature value is less than or equal to a second tolerance temperature threshold of the battery pack, reducing the opening degree of the electronic expansion valve to a second opening degree and reducing the rotational speed of the compressor to a second rotational speed; wherein the first tolerance temperature threshold is greater than the second tolerance temperature threshold;
when the difference between the maximum temperature value and the minimum temperature value is less than or equal to the designed threshold and is greater than 0,
if the maximum temperature value is greater than or equal to the first tolerance temperature threshold, turning on the stop valve and the first water pump, simultaneously increasing the opening degree of the electronic expansion valve to a third opening degree and increasing the rotational speed of the compressor to a third rotational speed;
if the maximum temperature value is less than or equal to the second tolerance temperature threshold, turning off the stop valve, reducing the opening degree of the electronic expansion valve to a fourth opening degree and reducing the rotational speed of the compressor to a fourth rotational speed;
wherein the first opening degree, the second opening degree, the third opening degree, and the fourth opening degree decrease in sequence; the first rotational speed, the second rotational speed, the third rotational speed, and the fourth rotational speed decrease in sequence.

6. The temperature control method according to claim 5, wherein the condenser is an air-cooled condenser, and the passenger compartment thermal management circuit further comprises a first fan adjacent to the condenser; and the temperature control method further comprises:
when increasing or decreasing the rotational speed of the compressor, simultaneously increasing or decreasing a rotational speed of the first fan.

7. The temperature control method according to claim 5, wherein the condenser is a water-cooled condenser, and the passenger compartment thermal management circuit further comprises a second water pump connected to the condenser, a heat radiator, and a second fan adjacent to the heat radiator; and the temperature control method further comprises:
when increasing or decreasing the rotational speed of the compressor, simultaneously increasing or decreasing a rotational speed of the second fan.

8. A temperature control apparatus for a battery pack, applied to a passenger compartment thermal management circuit and a battery pack thermal management circuit arranged in parallel, wherein the passenger compartment thermal management circuit comprises a main circuit, and a first branch and a second branch connected with the main circuit and arranged in parallel, the main circuit comprises a compressor, a condenser and a liquid reservoir arranged in sequence, the first branch comprises an evaporator and an electronic expansion valve connected to an inlet of the evaporator, the second branch comprises a cooler, a thermal expansion valve connected to an inlet of the cooler, and a stop valve connected to the thermal expansion valve; the battery pack thermal management circuit comprises a battery pack, a first water pump, and the cooler arranged in sequence, one side of the cooler facing the evaporator is refrigerant, and one side of the cooler facing the battery pack is coolant, a plurality of temperature sensors are provided in the battery pack to detect temperatures at various positions inside the battery pack; and the temperature control apparatus comprises:
an obtaining unit, configured to obtain a maximum temperature value and a minimum temperature value inside the battery pack;
a comparing unit, configured to compare whether a difference between the maximum temperature value and the minimum temperature value is greater than a designed threshold, and whether the maximum temperature value is greater than or equal to a first tolerance temperature threshold of the battery pack, and output a comparison result;
a control unit, configured to: if the comparison result is yes, turn on the compressor, the first water pump, and the stop valve to allow the first water pump to drive the coolant into the battery pack and exchange heat between heat generated by the battery pack and the refrigerant of the cooler.

9. The temperature control apparatus according to claim 8, wherein the comparing unit is further configured to compare whether the maximum temperature value is less than or equal to a second tolerance temperature threshold of the battery pack, and output a comparison result; the control unit is further configured to: if the comparison result is yes, turn off the stop valve and reduce a rotational speed of the compressor, wherein the first tolerance temperature threshold is greater than the second tolerance temperature threshold.

10. The temperature control apparatus according to claim 8 or 9, wherein the comparing unit is further configured to compare whether the difference between the maximum temperature value and the minimum temperature value is less than or equal to the designed threshold and is greater than 0; the control unit is further configured to: if the comparison result is yes, turn off the first water pump.

11. The temperature control apparatus according to any one of claims 8 to 10, wherein the obtaining unit is further configured to obtain a temperature value of a passenger compartment; the control unit is further configured to: if the temperature value of the passenger compartment is greater than a target threshold, turn on the electronic expansion valve and the compressor to cool the passenger compartment, and adjust an opening degree of the electronic expansion valve and a rotational speed of the compressor according to a temperature change of the battery pack.

12. The temperature control apparatus according to claim 11, wherein when the comparison result of the comparing unit is that the difference between the maximum temperature value and the minimum temperature value of the battery pack is greater than the designed threshold,
if the maximum temperature value is greater than or equal to the first tolerance temperature threshold of the battery pack, the control unit is further configured to increase the opening degree of the electronic expansion valve to a first opening degree and increase the rotational speed of the compressor to a first rotational speed;
if the maximum temperature value is less than or equal to a second tolerance temperature threshold of the battery pack, the control unit is further configured to reduce the opening degree of the electronic expansion valve to a second opening degree and reduce the rotational speed of the compressor to a second rotational speed; wherein the first tolerance temperature threshold is greater than the second tolerance temperature threshold;
when the comparison result of the comparing unit is that the difference between the maximum temperature value and the minimum temperature value of the battery pack is less than or equal to the designed threshold and is greater than 0,
if the maximum temperature value is greater than or equal to the first tolerance temperature threshold, the control unit is further configured to turn on the stop valve and the first water pump, simultaneously increase the opening degree of the electronic expansion valve to a third opening degree and increase the rotational speed of the compressor to a third rotational speed;
if the maximum temperature value is less than or equal to the second tolerance temperature threshold, the control unit is further configured to turn off the stop valve, reduce the opening degree of the electronic expansion valve to a fourth opening degree and reduce the rotational speed of the compressor to a fourth rotational speed;
wherein the first opening degree, the second opening degree, the third opening degree, and the fourth opening degree decrease in sequence; the first rotational speed, the second rotational speed, the third rotational speed, and the fourth rotational speed decrease in sequence.

13. The temperature control apparatus according to claim 12, wherein the condenser is an air-cooled condenser, and the passenger compartment thermal management circuit further comprises a first fan adjacent to the condenser; and the control unit is further configured to: when increasing or decreasing the rotational speed of the compressor, simultaneously increase or decrease a rotational speed of the first fan.

14. The temperature control apparatus according to claim 12, wherein the condenser is a water-cooled condenser, and the passenger compartment thermal management circuit further comprises a second water pump connected to the condenser, a heat radiator, and a second fan adjacent to the heat radiator; and the control unit is further configured to: when increasing or decreasing the rotational speed of the compressor, simultaneously increase or decrease a rotational speed of the second fan.

15. A temperature control device for a battery pack, comprising:
a memory, configured to store computer program instructions;
a processor, configured to: when the computer program instructions are executed by the processor, implement the temperature control method for the battery pack according to any one of claims 1-7.

16. A new energy vehicle, comprising a passenger compartment thermal management circuit and a battery pack thermal management circuit arranged in parallel, and the temperature control device for the battery pack according to claim 15, wherein the temperature control device is electrically connected to the passenger compartment thermal management circuit and the battery pack thermal management circuit, respectively.

17. A computer readable storage medium, storing computer executable instructions which, when executed by a processor, is configured to implement the method according to any one of claims 1 to 7.

18. A computer program product, comprising a computer program which, when executed by a processor, implements the method according to any one of claims 1 to 7.
